# EUROPÄISCHE PATENTANMELDUNG

(11) **EP 2 913 300 A1**
(43) Veröffentlichungstag der Anmeldung: **02.09.2015**
(21) Anmeldenummer: 15000543.7
(22) Anmeldetag: 25.02.2015
(51) Int. Cl.: C01B 31/02, C09K 11/02, C09K 11/61, C09K 11/77, G01N 33/58

(54) **Kohlenstoff-Punkte (C-Dots), Verfahren zu ihrer Herstellung und ihre Verwendung**

(30) Priorität: 28.02.2014 DE 102014002667; 11.06.2014 DE 102014108166
(71) Anmelder: Karlsruher Institut für Technologie, 76131 Karlsruhe (DE)
(72) Erfinder: Feldmann, Claus, 76275 Ettlingen (DE); Dong, Hailong, 76646 Bruchsal (CN); Kuzmanoski, Ana, 76131 Karlsruhe (RS); Gößl, Dorothee, 82131 Stockdorf (DE)
(74) Vertreter: Weddigen, Andreas

(57) **Zusammenfassung**

Diese Erfindung bezieht sich auf leuchtende Kohlenstoffnanopartikel (C-Dots), die auf ihrer Oberfläche mindestens ein Polyol tragen, deren Synthese und Modifizierung mit Metallen und/oder Seltenerdmetallen, die Lichtemission dieser Kohlenstoffnanopartikel sowie Anwendungsaspekte der hergestellten Kohlenstoffnanopartikel.

## Beschreibung

Die Erfindung betrifft leuchtende Kohlenstoff-Punkte, im nachfolgenden als C-Dot bezeichnet, ein Verfahren zu deren Herstellung und deren Verwendung. Unter einem C-Dot, einem Kohlenstoff-Punkt (engl. Carbon Dot) versteht man nanoskalige Kohlenstoffpartikel mit graphitartigem Aufbau und Struktur sowie sphärischer Morphologie, typischerweise mit Partikeldurchmessern von kleiner 100nm, die unter Einwirkung von UV- oder sichtbarem Licht Photolumineszenz aufweisen.

Die zugrunde liegenden Photolumineszenzprozesse sind zum Teil bislang nicht vollständig verstanden, jedoch ist von einer essentiellen Beteiligung oberflächennaher Defektzustände auszugehen. Qu et al. 2012 (Angew. Chem. Int. Ed., 51, 12215) und Sun et al 2006 (J. Am. Chem. Soc., 128, 7756) zeigen, dass eine hohe Kristallinität der graphitartigen Kohlenstoffschichten, gegebenenfalls eine Dotierung mit Heteroatomen und eine Passivierung der Partikeloberflächen mit Polyethylenglykol, langkettigen Aminen oder Stabilisatoren im Sinne einer hohen EmissionsIntensität und einer hohen Quantenausbeute essentiell ist

C-Dots sind aufgrund ihrer physikalischen Eigenschaften und dem weiten Bereich potentieller Anwendungen sehr Interessant. So lassen sie sich für biomedizinische Anwendungen, wie z. B. optische Marker, optische Bildgebungsmethoden, optische Nachweismethoden, optoelektronische Geräte wie Leuchtdioden, Displays, Solarzellen aber auch als Katalysatoren einsetzen. Wie in Shen et al. 2012 (Chem. Commun., 48, 3686) und Baker et al. 2010 (Angew. Chem, Int. Ed. 2010, 49, 6726) beschrieben, bieten Kohlenstoff-Nanopartikel im Gegensatz zu den schwermetallhaltigen Quantenpunkten (Q-Dots), vielfältige Vorteile, so zum Beispiel die Abwesenheit toxischer Schwermetalle, die hohe physikalisch-chemische Stabilität, die sehr gute Dispergierfähigkeit in Wasser oder die kontinuierliche Emission ohne Blinkeffekte. Im Vergleich zu molekularen Fluoreszenzfarbstoffen zeigen Kohlenstoffnanopartikel eine sehr vorteilhafte breite Anregbarkeit und nur geringes optisches Ausbleichen.

Die Herstellung von C-Dots erfolgt bisher nach Shen et al 2012, Baker et al. 2010 und Dong et al 2013 (Angew. Chem. Int. Ed., 52, 7800) aus heißgepresstem Graphit, Kohle, Kohlenstoff aus Bogenentladungen oder Laserablation, Graphen und Graphenoxid, Ruß aus Plasmaquellen und von Kerzen. Darüber hinaus werden die leuchtenden C-Dots durch die thermische Karbonisierung von Kohlenhydraten, Polymeren oder Aminosäuren eingesetzt. Die erhaltenen Kohlenstoffnanopartikel weisen zum Teil Quantenausbeuten bis zu 80 % auf.

In aktuellen Übersichtsarbeiten beschreiben Shen et al. 2012 und Xu et al. 2013 (Chem. Eur. J. 2013, 19, 2276) alternative Zugangswege zu Kohlenstoffnanopartikeln über mikrowellenbasierte und solvothermale Methoden sowie die Karbonisierung molekularer Ausgangssubstanzen in der flüssigen Phase. Zu den molekularen Ausgangssubstanzen zählen Kohlenhydrate, mehrwertige Alkohole (Polyole) sowie Tetrachlorkohlenstoff und Natriumamid, Zitronensäure und Ethylendiamin, Natriumcitrat und Harnstoff und auch Aminosäuren Diese Flüssigphasenmethoden weisen den Nachteil deutlich geringerer Emissionsintensitäten und Quantenausbeuten auf. Letztere liegen unter 40 %. So schlagen Liu et al. 2014 (Carbon 2014, 68, 258) die thermische Zersetzung von Sukrose als Kohlenstoffquelle in Diethylenglykol vor. Die erhaltenen C-Dots zeigen interessante grüne Emission; eine Quantenausbeute wird jedoch nicht genannt. Eine Emission anderer Farben wurde bislang nicht gezeigt. Eine hydrothermale Behandlung von PEG mit einem Molekulargewicht von 400-6000 g mol⁻¹ in Wasser zeigen Fan et al. 2014 (Carbon 2014, 71, 87), wobei wiederum keine Quantenausbeuten genannt werden. Wang et al. 2011 (J. Mater. Chem. 2011, 21, 2445) zeigen die Herstellung von C-Dots aus Polyolen (Glycerin, Glykol, Glukose, Sukrose) durch Zersetzung mit Mikrowellen, wobei wiederum keine Quantenausbeuten genannt werden. Jaiswal et al. 2012 (Chem. Commun. 2012, 48, 407) verwenden ebenfalls Mikrowellen-Methoden zum Karamellisieren von Polyethylenglykol und berichten über Quantenausbeuten 16 %.

Obwohl diese Methoden gut etabliert sind, weisen sie eine Reihe an Nachteilen auf. So werden zum Teil sehr aufwendige, komplexe Herstellungsmethoden verwendet. Die Herstellung der Kohlenstoffnanopartikel ist wenig kontrollierbar. Die Synthesebedingungen erfordern zum Teil teure, schlecht zugängliche Ausgangsverbindungen und aufwendige technische Ausstattung. Die verwendeten Pulvermethoden und/oder Hochtemperaturmethoden bedingen eine starke Agglomeration der Kohlenstoffnanopartikel sowie geringe Ausbeuten. Die Reinigung und Isolierung der Kohlenstoffnanopartikel ist zum Teil sehr aufwendig. Aufgrund der Agglomeration ist das Dispergieren in Wasser oder anderen Lösungsmitteln schwierig und führt zu breiten Größenverteilungen und eingeschränkter kolloidaler Stabilität.

Davon ausgehend ist es die Aufgabe der Erfindung, neue C-Dots vorzuschlagen, die die Nachteile der bekannten C-Dots überwinden. Insbesondere sollen solche C-Dots vorgeschlagen werden, welche in wässrigen Medien gut dispergiert werden können und auch bei langwelliger Emission hohe Emissionsintensitäten und Quantenausbeuten aufweisen.

In Hinblick auf das Verfahren zur Herstellung der C-Dots bestand die Aufgabe darin, eine Methode vorzuschlagen, die die Nachteile der bekannten Methoden überwindet. Insbesondere soll eine einfache Methode vorgeschlagen werden, die zu einer geringen Agglomeration der C-Dots führt.

Die Aufgabe wird im Hinblick auf die C-Dots durch die Merkmale des *Anspruchs 1*, im Hinblick auf das Verfahren zur Herstellung der C-Dots durch die Verfahrensschritte des *Anspruchs* 5 und im Hinblick auf die Verwendung durch die *Ansprüche 7-10* gelöst. Die Unteransprüche geben vorteilhafte Ausgestaltungen der Erfindung wieder.

Um die Aufgabe zu lösen, werden C-Dots mit graphitartigem Aufbau und Struktur sowie sphärischer Morphologie mit Partikeldurchmessern von 0,001 nm bis 100 nm, bevorzugt von 0,01 nm -10 nm, besonders bevorzugt von 3 nm - 5 nm vorgeschlagen, die mindestens ein auf ihrer Oberfläche gebundenen mehrwertiger Alkohol (Polyol) aufweisen. Sind zwei oder mehr Polyole auf der Oberfläche des C-Dots gebunden sind diese die gleichen oder voneinander verschiedene Polyole. Die C-Dots entstehen durch Zersetzung des Polyols, auch als Dehydratisierung und Karbonisierung bezeichnet. Ein besonderer Vorteil dieser Synthese ist die Herstellung der C-Dots durch Zersetzung des mindestens einen Polyols im reinen Polyol oder im Polyolgemisch (als Lösungsmittel), somit befindet sich auf der Oberfläche der C-Dots immer unzersetztes Polyol, was die C-Dots gegen Agglomeration schützt und gleichzeitig der Grund für die gut kontrollierte Keimbildung mit engen Größenverteilungen ist. Eine Polyol ist eine chemische Verbindung, die mindestens zwei an aliphatische oder aromatische Kohlenwasserstoffe gebundene Hydroxylgruppen aufweist. Dieses mindestens eine Polyol stabilisiert die C-Dots und führt zu einer unmittelbaren Disperglerbarkeit in Wasser und anderen Lösungsmitteln, zu einer guten Kontrolle der Keimbildung und damit zu einer engen Verteilung bei Partikeldurchmessern der C-Dots von 0,001 nm bis 100 nm, bevorzugt von 0,01 nm -10 nm, besonders bevorzugt von 3 nm - 5 nm , sowie durch die Passivierung der C-Dot-Oberfläche zu einer hohen Quantenausbeute.

In besonderen Ausgestaltungen werden die Polyole ausgewählt unter Glyzerin, Glykol, Dietylenglykol, Butandiol, Pentaerythrit oder Polyethylenglykol oder Gemische daraus. Polyethylenglykol (PEG), ist ein Polymer mit der aligemeinen Summenformel C₂ₙH₄ₙ₊₂Oₙ₊₁ und wird mit seinem mittleren Molekulargewicht beschrieben, wie z. B. PEG200, PEG400, PEG800, PEG2000. Die Definition umfasst auch die hochkettigen Polyethylenglykole mit einer Molekularmasse >35.000g/mol, die in der Literatur häufig auch als Polyethylenoxide bezeichnet werden.

In einer weiteren Ausgestaltung tragen die C-Dots mindestens einen zusätzlichen einwertigen Alkohol auf ihrer Oberfläche.

C-Dots, die auf ihrer Oberfläche mindestens ein Polyol tragen, lassen sich unmittelbar in Wasser oder Ethanol dispergieren. Die Herstellung wässriger Suspensionen mit C-Dots, die keine Polyole auf der Oberfläche tragen, d.h. ein heterogenes Stoffgemisch aus Wasser und darin fein verteilte polyol-freie C-Dots stellen aufgrund der hohen Oberflächenspannung des Lösungsmittels häufig eine besondere Schwierigkeit dar. So werden wässrige Suspensionen der C-Dots, die auf der Oberfläche mindestens ein Polyol tragen, mit hervorragender kolloidaler Stabilität und Partikelgrößen von 3-5 nm sehr einfach erhalten.

Die erfindungsgemäßen C-Dots weisen zusätzlich mindestens einen Metallion auf. Dieses mindestens eine Metallion ist auf der Oberfläche oder im Inneren des C-Dots gebunden. Besonders bevorzugt ist der Zusatz von Mg²⁺, Mn²⁺, Zn²⁺, Al³⁺, B³⁺, In³⁺, Y³⁺, La³⁺, einem Lanthanoidion Ln³⁺, (mit Ln: Ce, Pr, Nd, Sm, Eu, Gd, Tb, Dy, Ho, Er, Tm, Yb, Lu), Si⁴⁺ oder Ti⁴⁺ oder einem Gemisch daraus.

Die eingesetzten Metallionen verändern die Fluoreszenzeigenschaften der C-Dots. Bei der Verwendung von Lanthanoiden (Ce, Pr, Nd, Sm, Eu, Gd, Tb, Dy, Ho, Er, Tm, Yb, Lu) kommt es zu einer Veränderung der Fluoreszenz der C-Dots durch Energietransfer vom C-Dot auf das Seltenerdmetall und darauf nachfolgende Fluoreszenz des Seltenerdmetalls.

In einer bevorzugten Ausgestaltung werden Lanthanoide eingesetzt, die f-f Linienemissionen ermöglichen, welche zum Beispiel dazu führt, dass bei Verwendung von Eu³⁺ rotes Licht erzeugt wird. Daher werden besonders bevorzugt Lanthanoide wie Eu³⁺(rot), Tb³⁺ (grün), Yb³⁺ (infrarot), Tm³⁺ (blau) oder Er³⁺ (grün) eingesetzt.

In einer weiteren Ausgestaltung werden Lanthanoide eingesetzt, die eine d-f LinienEmissionen der Seltenerdmetalle zeigen.

In einer weiteren Ausgestaltung werden mehrerer Metallionen, bevorzugt mehrere Lanthanoidionen und/oder Gemische mit mindestens einem Lanthanoidion gemeinsam eingesetzt, um einen Mehrphotonenprozess, (sogenannte Up-Conversion oder Down-Conversion) über die Energiezustände eines oder mehrerer Metallionen zu erhalten.

Neben der hohen kolloidalen Stabilität und der engen Größenverteilung zeigen die erfindungsgemäßen C-Dots eine intensive Lichtemission mit hohen Quantenausbeuten um 50 %. Diese können mit UV-Strahlung, aber auch mit sehr einfachen UV-LEDs oder blauen LEDs angeregt werden.

Die vorliegende Erfindung betrifft weiterhin ein Verfahren zur Herstellung der C-Dots. Diese werden erzeugt, indem im Verfahrensschritt a) mindestens ein Polyol bereitgestellt wird. Bevorzugt verwendet werden Glycerin, Glykol, Dietylenglykol, Butandiol, Pentaerythrit oder Polyethylenglykol. In einer besonderen Ausgestaltung werden mindestens zwei Polyole als Gemisch verwendet. In einer weiteren Ausgestaltung wird dem mindestens einen Polyol mindestens ein einwertiger Alkohol zugesetzt.

Im Verfahrensschritt b) wird das mindestens eine Polyol auf mindestens 150 °C, bevorzugt auf mindesten 180°C, besonders bevorzugt auf 230°C erhitzt. Die Temperatur wird für mindestens 30 min, bevorzugt für 1 Stunde bis 4 Stunden gehalten.

In diesem Verfahrensschritt findet eine Dehydratisierung und Karbonisierung des mindestens einen Polyols statt.

In einer besonderen Ausgestaltung findet Verfahrensschritt b) in der Form statt, dass das mindestens eine zu erhitzende Polyol refluxiert wird.

In einer weiteren Ausgestaltung werden Dehydratisierung und Karbonisierung des mindestens einen Polyols im Verfahrensschritt b) durch Zugabe von Metallverbindungen im Verfahrensschritt a) und/oder b), bevorzugt von Metallhalogeniden oder Metallnitraten, unterstützt. Die zugesetzten Metallverbindungen werden auch zur Steuerung der Partikelgröße und/oder zur Erhöhung der Quantenausbeute eingesetzt. Besonders bevorzugt ist hier die Verwendung Lewis-acider, oxophiler Metallverbindungen, wie MgCl₂, Mg(NO₃)₂, MnCl₂, Mn(NO₃)₂, ZnCl₂, Zn(NO₃)₂, AlCl₃, Al(NO₃)₃, BCl₃, B(NO₃)₃, InCl₃, In(NO₃)₃, YCl₃, Y(NO₃)₃, LaCl₃, La(NO₃)₃, eines Lanthanoidchlorids oder -nitrats der Zusammensetzung LnCl₃ oder Ln(NO₃)₃ (mit Ln: Ce, Pr, Nd, Sm, Eu, Gd, Tb, Dy, Ho, Er, Tm, Yb, Lu), SiCl₄ oder TiCl₄ bzw. der jeweiligen Hydrate dieser Verbindungen. Es werden eine oder mehrere voneinander verschiedene Metallverbindungen verwendet, wobei davon sowohl die Verwendung von verschiedenen Metallverbindungen des gleichen Metalls als auch die Verwendung von verschiedenen Metallverbindungen verschiedener Metalle umfasst sind. Bevorzugt werden die Metallverbindungen in einer Menge von 0,001 bis 50 mmol, besonders bevorzugt in einer Menge von 0,1 bis 0,5 mmol, Metallverbindung bezogen auf 10 ml des Polyols eingesetzt, Werden mehrere Metallverbindungen eingesetzt, dann entspricht die Summe der Metallverbindungen einer Menge von 0,001 bis 50 mmol, besonders bevorzugt in einer Menge von 0,1 bis 0,5 mmol, Metallverbindung bezogen auf 10 ml des Polyol.

Im abschließenden Verfahrensschritt c) erfolgt die Entnahme des Produkts, der C-Dots. Dazu wird die in Verfahrensschritt b) erhitzte Lösung in einer Ausgestaltung abgekühlt und das Produkt liegt als C-Dots in dem verwendeten mindestens einem Polyol vor.

Die hergestellten C-Dots werden in einer Ausgestaltung durch Ultrazentrifugation (>50.000-fache der Erdanziehungskraft) und in einer weiteren Ausgestaltung durch kolloidales Destabilisieren, z. B. durch Zugabe eines Lösungsmittels, wie Aceton, vom Polyol abgetrennt. Das Lösungsmittel wird in diesem Zusammenhang in 5-10-fachem Volumen, bezogen auf das Volumen des eingesetzten Polyols oder Polyolgemisches, zugegeben und reduziert die Viskosität der Suspension bzw. destabilisiert die C-Dots, so dass diese sedimentieren. Entsprechende Verfahrensschritte sind dem Fachmann bekannt. Die Reinigung der C-Dots erfolgt in einer Ausgestaltung durch wiederholtes Resuspendieren und Zentrifugieren aus geeigneten Lösungsmitteln, wie z. B. Wasser, Ethanol, Isopropanol, Aceton, Acetonitril, oder aus Gemischen dieser Lösungsmittel, um überschüssiges Polyol und überschüssige Metallsalze abzutrennen. Die Reinigung erfolgt in einer weiteren Ausgestaltung über Dialyse. Abschließend werden die C-Dots in einer Ausgestaltung als Pulver getrocknet und/oder in einem geeigneten Lösungsmittel redispergiert.

Insgesamt lässt sich die hier beschriebene Synthesesequenz einfacher, billiger und kontrollierbarer durchführen als alternativ dem Stand der Technik entsprechend in Mikrowellenapparaturen. Die besser kontrollierbare Partikelgröße und die deutlich höheren Quantenausbeuten belegen den Vorteil der hier verwendeten Synthesemethode sehr deutlich.

Wird das erfindungsgemäße Verfahren im Verfahrensschritt b) unter Zugabe von Metallverbindungen, bevorzugt Lanthanoidverbindungen durchgeführt, ist die Oberfläche der C-Dots nach der Synthese mit Metallionen, bevorzugt Lanthanoidionen belegt. Durch Fluoreszenzresonanz-Energietransfer (FRET) gelingt nach Anregung des C-Dots ein Energieübertrag auf die Lanthanoidionen, die dann Lichtemission zeigen. Dabei treten hohe Lichtemissionen und Quantenausbeuten auf. In Gegenwart Tb³⁺ liegen die Quantenausbeuten bei bis zu 85 %, in Gegenwart von Eu³⁺ bei bis zu 75 %, Beobachtet wird hier die charakteristische f-f-Linienemission der Lanthanoidionen. Das ist neu und überraschend, da die paritätsverbotene Emission der f-f-Übergänge in Gegenwart OH-haltiger Lösungsmittel typischerweise vollständig oder weitgehend gelöscht ist. Auch d-f-Übergänge der Lanthanoidionen sind in OH-haltigen Lösungsmitteln typischerweise sehr intensitätsschwach. Basierend auf der effizienten Lichtemission und den hohen Quantenausbeuten, die erstmals belegt werden, bieten sich vielfältige Möglichkeiten für die Anwendung, die die Einschränkungen im Hinblick auf den Stand der Technik lösen. Für alle aus dem Stand der Techniken bekannten C-Dots bestehen zudem generell die Einschränkungen, dass langwellig emittierende C-Dots, insbesondere im Bereich der roten und infraroten Emission, bislang nur sehr geringe Emissionsintensitäten und Quantenausbeuten aufweisen (< 20 %). Zudem ist die breite Emission der C-Dots im roten Spektralbereich sehr nachteilig, da diese zum größten Teil außerhalb der Augenempfindlichkeit liegt und somit für das menschliche Auge nicht wahrnehmbar ist. So liegt die Rotemission der erfindungsgemäßen C-Dots, besonders der erfindungsgemäßen Eu³⁺-modifizierten C-Dots, noch exakt innerhalb der Augenempfindlichkeit (< 750 nm). Die Linienemission der Lanthanoidionen wird zudem sehr einfach detektiert. Damit stehen effiziente Lanthanoid-modifizierte C-Dots und zudem effiziente rot emittierende C-Dots zur Verfügung, die im Hinblick auf vielfarbige Emission, Weisslichtemission in optoelektronischen Geräten (z. B. Leuchtdioden, Displays, Solarzellen) und im Hinblick auf biomedizinische Anwendungen (z. B. optische Marker, optische Bildgebungsmethoden, optische Nachweismethoden) von größter Bedeutung sind.

Die erfindungsgemäßen C-Dots finden Verwendung bei biomedizinischen Anwendungen. Besonders bevorzugt sind dabei die optische Bildgebung und die Verwendung für optische Nachweisreaktionen, die optische Detektion oder optische Sensoren.

Die erfindungsgemäßen C-Dots finden ebenfalls Verwendung bei optoelektronischen Anwendungen, insbesondere in Leuchtdioden, Displays oder Solarzellen. Besonders bevorzugt ist eine Einbettung der C-Dots in Polymere oder eine Abscheidung auf Polymer-, Kunststoff- oder Glasoberflächen, die nachfolgend Lichtemission zeigen.

Die erfindungsgemäßen C-Dots finden weiterhin Verwendung in der Katalyse, bevorzugt in der photokatalytischen Wasserreinigung, photokatalytischen Wasserspaltung, photokatalytischem Abbau organischer Verunreinigungen, Photodesinfektion, photokatalytischen oder katalytischen organisch-chemischen Reaktionen, photokatalytischen oder katalytischen organisch-chemischen Hydrierungen, photokatalytische oder katalytische organisch-chemische CO₂- bzw. CH₄-Aktivierung.

Die erfindungsgemäßen C-Dots finden weiterhin Verwendung für photodynamische Therapien.

Die vorliegende Erfindung wird anhand der nachfolgenden Figuren und Ausführungsbeispiele näher erläutert, Es zeigen:

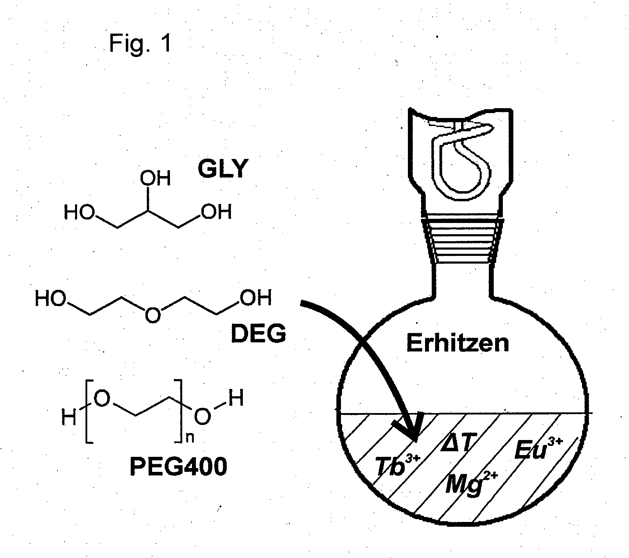

**Fig.** 1 das Schema der Herstellung der erfindungsgemäßen C-Dots;

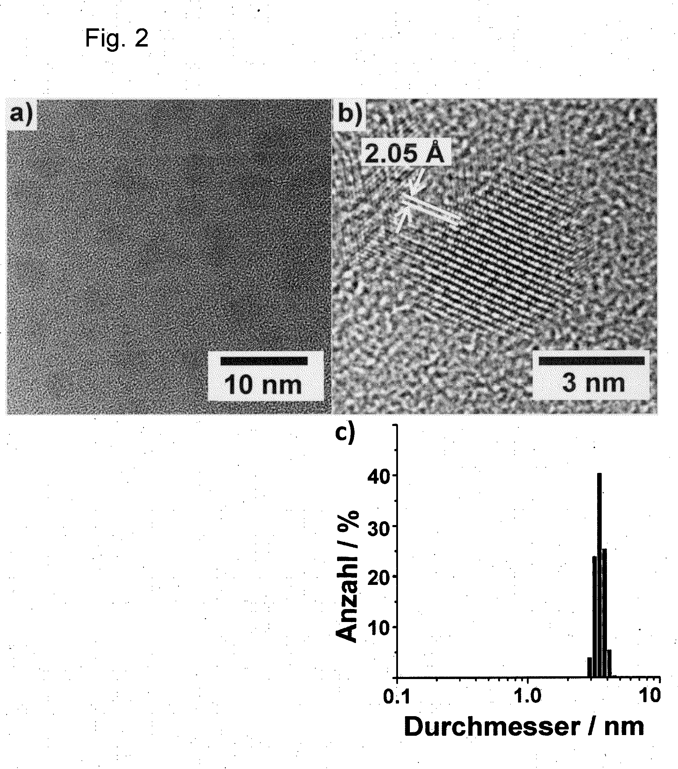

**Fig. 2** die Größe, Größenverteilung und Kristallinität der durch das erfindungsgmäße Verfahren hergestellten C-Dots, a) Transmissionselektronenmikroskopisches Übersichtsbild; b) Hochaufgelöstes transmissionselektronenmikroskopisches Bild mit Gitterabständen; c) Größenverteilung von C-Dots nach dem Dispergieren in Wasser (gemäß Dynamischer Lichtstreuung):

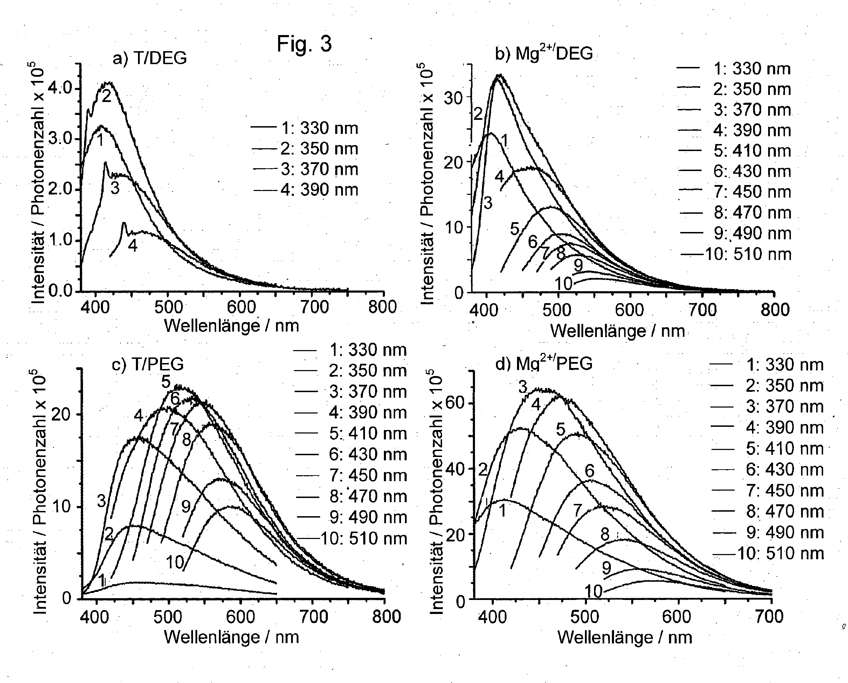

**Fig. 3** die Photolumineszenz der mit dem erfindungsgemäßen Verfahren hergestellten C-Dots bei Anregung mit unterschiedlichen Wellenlängen, a) Diethylenglykol nach Erhitzen (230 °C, 1 h); b) Diethylenglykol nach Erhitzen in Gegenwart von MgCl₂x6H₂O (230 °C, 1 h, 0.5 mmol MgCl₂x6H₂O); c) Polyethylenglykol (PEG400) nach Erhitzen (230 °C, 1 h); d) Polyethylenglykol (PEG400) nach Erhitzen in Gegenwart von MgCl₂x6H₂O (230 °C, 1 h, 0.5 mmol MgCl₂x6H₂O):

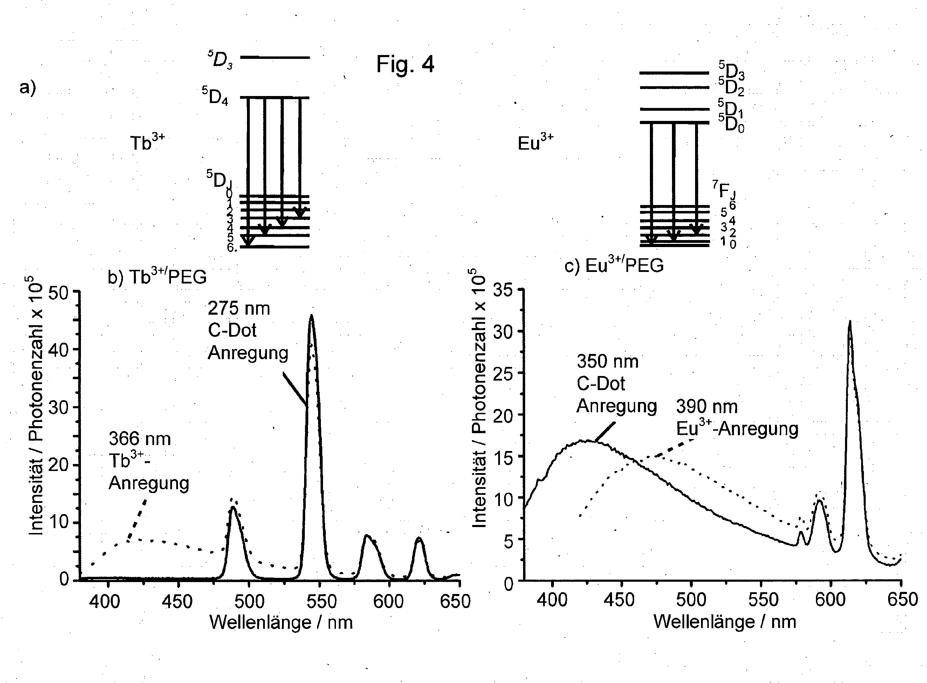

**Fig. 4** die Emission Tb³⁺/Eu³⁺-modifizierter C-Dots a) Schema des Fluoreszenzresonanz-Energytransfers (FRET); b) Polyethylenglykol (PEG400) nach Erhitzen in Gegenwart von TbCl₃x6H₂O (230 °C, 1 h, 0.5 mmol TbCl₃x6H₂O); c) Polyothylenglykol (PEG400) nach Erhitzen in Gegenwart von EuCl₃x6H₂O (230 °C, 1 h, 0.5 mmol EuCl₃x6H₂O).

### Ausführungsbeispiel 1 - Erhitzen von Polyethylenglykol (PEG400)

10 ml Polyethylenglykol 400 (PEG400) wurden in Stickstoff- oder Argon-Atmosphäre in einem Rundkolben mit Rückfluß- oder Destillationskühler für 1 h auf 230 °C erhitzt. Nach dem Abkühlen erhält man eine leicht bräunliche Suspension mit C-Dots in PEG400 (50-200 mg C-Dots pro 10 ml PEG400). Bei Anregung mit UV-Licht zeigt die Suspension, wie in Fig. 3b gezeigt, eine intensive blaue Lumineszenz mit einer Quantenausbeute von 50 %. Die hergestellte Suspension ist unmittelbar in Wasser dispergierbar.

### Ausführungsbeispiel 2 - Erhitzen von Polyethylenglykol (PEG400) mit MgCl₂x6H₂O

10 ml Polyethylenglykol 400 (PEG400) und 0.5 mmol MgCl₂x6H₂O wurden in Stickstoff- oder Argon-Atmosphäre in einem Rundkolben mit Rückfluß- oder Destillationskühler für 2 h auf 230 °C erhitzt. Nach dem Abkühlen erhält man eine leicht bräunliche Suspension mit Mg-modifizierten C-Dots in PEG400 (50-200 mg C-Dots pro 10 ml PEG400). Bei Anregung mit einer blau-Licht LED zeigt die Suspension, wie in Fig. 3d gezeigt, intensive gelbe Lumineszenz mit einer Quantenausbeute von 45 %. Die hergestellte Suspension ist unmittelbar in Wasser dispergiertbar. Die Anwesenheit von Magnesium wird z. B. durch energiedispersive Röntgenanalyse nachgewiesen.

### Ausführungsbeispiel 3 - Erhitzen von Polyethylenglykol (PEG400) mit TbCl₃x6H₂O:

10 ml Polyethylenglykol 400 (PEG400) und 0.5 mmol TbCl₃x6H₂O wurden in Stickstoff- oder Argon-Atmosphäre in einem Rundkolben mit Rückfluß- oder Destillationskühler für 2 h auf 230 °C erhitzt. Nach dem Abkühlen erhält man eine leicht bräunliche Suspension mitTb-modifizierten C-Dots in PEG400 (50-200 mg C-Dots pro 10 ml PEG400). Bei Anregung mit einer blau-Licht LED zeigt die Suspension intensive grüne Lumineszenz mit einer Quantenausbeute von 85 %. Die hergestellte Suspension ist unmittelbar in Wasser dispergiertbar. Die Anwesenheit von Terbium wird z. B. durch energiedispersive Röntgenanalyse bzw. anhand der Anregungs- und Emissionsspektren nachgewiesen, wie in Fig 4b) gezeigt.

### Ausführungsbeispiel 4 - Erhitzen von Polyethylenglykol (PEG400) mit EuCl₃x6H₂O

10 ml Polyethylenglykol 400 (PEG400) und 0.5 mmol EuCl₃x6H₂O wurden in Stickstoff- oder Argon-Atmosphäre in einem Rundkolben mit Rückfluß- oder Destillationskühler für 1 h auf 230 °C erhitzt. Nach dem Abkühlen erhält man eine leicht bräunliche Suspension mit Eu-modifizierten C-Dots in PEG400 (50-200 mg C-Dots pro 10 ml PEG400). Bei Anregung mit einer blau-Licht LED zeigt die Suspension intensive rote Lumineszenz mit einer Quantenausbeute von 75 %. Die hergestellte Suspension ist unmittelbar in Wasser dispergiertbar. Die Anwesenheit von Europium wird z. B. durch energiedispersive Röntgenanalyse bzw. anhand der Anregungs- und Emissionsspektren nachgewiesen, wie in Fig 4c) gezeigt.

### Ausführungsbeispiel 5 - Erhitzen von Glycerin (GLY) mit EuCl₃x6H₂O

10 ml Glycerin und 2.0 mmol EuCl₃x6H₂O wurden in Stickstoff- oder Argon-Atmosphäre in einem Rundkolben mit Rückfluß- oder Destillationskühler für 4 h auf 230 °C erhitzt. Nach dem Abkühlen erhält man eine leicht bräunliche Suspension mit Eu-modifizierten C-Dots in Glycerin (50-200 mg C-Dots pro 10 ml Glycerin). Bei Anregung mit einer blau-Licht LED zeigt die Suspension intensive rote Lumineszenz mit einer Quantenausbeute von 70 %. Die hergestellte Suspension ist unmittelbar in Wasser dispergiertbar. Die Anwesenheit von Europium wird z. B. durch energiedispersive Röntgenanalyse bzw. anhand der Anregungs- und Emissionsspektren nachgewiesen.

### Ausführungsbeispiel 6 - Erhitzen von Diethylenglykol (DEG) und Polyethylenglykol (PEG2000) mit EuCl₃x6H₂O

10 ml Diethylenglykol (DEG), 2 g Polyethylenglykol 2000 (PEG2000) und 0.5 mmoi EuCl₃x6H₂O wurden in Stickstoff- oder Argon-Atmosphäre in einem Rundkolben mit Rückfluß- oder Destillationskühler für 1 h auf 230 °C erhitzt (z. B. Ölbad, Heizpilz). Nach dem Abkühlen erhält man eine leicht bräunliche Suspension mit Eu-modifizierten C-Dots in DEG/PEG2000 (50-200 mg C-Dots pro 10 ml DEG). Bei Anregung mit einer blau-Licht LED zeigt die Suspension intensive rote Lumineszenz mit einer Quantenausbeute von 90 %. Die hergestellte Suspension ist unmittelbar in Wasser dispergiertbar. Die Anwesenheit von Europium wird z. B. durch energiedispersive Röntgenanalyse bzw. anhand der Anregungs- und Emissionsspektren nachgewiesen.

### Ausführungsbeispiel 7 - Erhitzen von Diethylenglykol (DEG) mit ZCl₂x6H₂O

10 ml Diethylenglykol (DEG) und 0.1 mmol ZnCl₂x6H₂O wurden in Stickstoff- oder Argon-Atmosphäre in einem Rundkolben mit Rückfluß- oder Destillationskühler für 5 h auf 200 °C erhitzt (z. B. Ölbad, Heizpilz). Nach dem Abkühlen erhält man eine leicht bräunliche Suspension mit Zn-modifizierten C-Dots in DEG (50-200 mg C-Dots pro 10 ml DEG). Bei Anregung mit UV-Licht zeigt die Suspension intensive grüne Lumineszenz mit einer Quantenausbeute von 55 %. Die hergestellte Suspension ist unmittelbar in Wasser dispergiertbar. Die Anwesenheit von Zink wird z. B. durch energiedispersive Röntgenanalyse nachgewiesen.

### Ausführungsbeispiel 8 - Erhitzen von Butandiol (BTD) und Pentaerythrith (PTE) mit TbCl₃x6H₂O

10 ml Butandiol (BTD), 1 g Pentaerythrith (PTE) und 1.0 mmol TbCl₃x6H₂O wurden in Stickstoff- oder Argon-Atmosphäre in einem Rundkolben mit Rückfluß- oder Destillationskühler für 1 h auf 230 °C erhitzt (z. B. Ölbad, Heizpilz). Nach dem Abkühlen erhält man eine leicht bräunliche Suspension mit Tb-modifizierten C-Dots in BTD/PTE (50-200 mg C-Dots pro 10 ml BTD). Bei Anregung mit einer blau-Licht LED zeigt die Suspension intensive grüne Lumineszenz mit einer Quantenausbeute von 85 %. Die hergestellte Suspension ist unmittelbar in Wasser dispergiertbar. Die Anwesenheit von Terbium wird z. B. durch energiedispersive Röntgenanalyse bzw. anhand der Anregungs- und Emissionsspektren nachgewiesen.

### Ausführungsbeispiel 9 - Erhitzen von Polyethylenglykol (PEG400) mit YbCl₃x6H₂O

10 ml Polyethylenglykol 400 (PEG400) und 0.5 mmol YbCl₃x6H₂O wurden in Stickstoff- oder Argon-Atmosphäre in einem Rundkolben mit Rückfluß- oder Destillationskühler für 2 h auf 230 °C erhitzt (z. B. Ölbad, Heizpilz). Nach dem Abkühlen erhält man eine leicht bräunliche Suspension mit Yb-modifizierten C-Dots in PEG400 (50-200 mg C-Dots pro 10 ml PEG400). Bei Anregung mit einer blau-Licht LED zeigt die Suspension intensive infrarote Lumineszenz mit einer Quantenausbeute von 60 %. Die hergestellte Suspension ist unmittelbar in Wasser dispergierbar Die Anwesenheit von Ytterbium wird z. B. durch energiedispersive Röntgenanalyse bzw. anhand der Anregungs- und Emissionsspektren nachgewiesen.

### Literatur

Shen et al. 2012: J. Shen, Y, Zhu, X, Yang, C. Li, Chem. Commun. 2012, 48, 3686. Baker et al. 2010: S. N. Baker, G. A. Baker, Angew. Chem, Int. Ed. 2010, 49, 6726. Dong et al. 2013: Y, Dong, H, Pang, H. B. Yang, C, Guo, J. Shao, Y. Chie, C. M. Li, T. Yu, Angew, Chem. Int. Ed. 2013, 52, 7800.
Liu et al. 2014: Y. Liu, N. Xiao, N. Gong, H. Wang, X. Shi, W. Gu, L. Ye, Carbon 2014, 68, 258.
Fan et al. 2014: R. J. Fan, Q. Sun, L. Zhang, Y. Zhang, A. H. Lu, Carbon 2014, 71, 87.
Wang et al. 2011: X. Wang, K. Qu, B. Xu, J. Ren, X. Qu, J. Meter. Chem. 2011, 21, 2445.
Jaiswal et al. 2012: A. Jaiswal, S. S. Ghosh, A. Chattopadhyay, Chem. Commun. 2012, 48, 407.
Xu et al. 2013: Y. Xu, M. Wu, Y. Liu, X. Z. Feng, X. B. Yin, X, W. He, Y. K. Zhang, Chem. Eur. J, 2013, 19, 2276.

## Patentansprüche

1. C-Dots auf deren Oberfläche mindestens ein Polyol gebunden ist, umfassend mindestens ein Metallion.

2. C-Dots gemäß Anspruch 1, wobei das mindestens eine Polyol Glyzerin, Glykol, Diethylenglykol, Butandiol, Pentaerythrit, Polyethylenglykol oder ein Gemisch daraus umfasst.

3. C-Dots nach Anspruch 1 oder 2, wobei das mindestens eine Metallion ausgewählt ist aus der Liste Mg²⁺, Mn²⁺, Zn²⁺, Al³⁺, B³⁺, In³⁺, Y³⁺, La³⁺, Si⁴⁺, Ti⁴⁺, ein Lahthanoidion Ln³⁺ mit Ln: Ce, Pr, Nd, Sm, Eu, Gd, Tb, Dy, Ho, Er, Tm, Yb, Lu, oder Gemischen daraus.

4. C-Dots nach Anspruch 2 oder 3, wobei das mindestens eine Metallion ausgewählt ist aus der Liste der Lanthanoidionen Ln³⁺ mit Ln: Ce, Pr, Nd, Sm, Eu, Gd, Tb, Dy, Ho, Er, Tm, Yb, Lu.

5. Verfahren zur Herstellung von C-Dots mit folgenden Verfahrensschritten
a) Bereitstellen eines Polyols,
b) Erhitzen des Polyols auf mindestens 150 °C,
c) Entnahme der C-Dots.

6. Verfahren zur Herstellung von C-Dots nach Anspruch 5, wobei dem Polyol im Verfahrensschritt a) und/oder b) mindestens eine Metallverbindung zugesetzt wird.

7. Verwendung von C-Dots gemäß Anspruch 1 für photodynamische Therapien.

8. Verwendung von C-Dots gemäß Anspruch 1 für die optische Bildgebung, optische Nachweisreaktionen, optische Detektion und/oder optische Sensoren.

9. Verwendung von C-Dots gemäß Anspruch 1 in Leuchtdioden, Displays und/oder Solarzellen.

10. Verwendung von C-Dots gemäß Anspruch 1 in der photokatalytischen Wasserreinigung, photokatalytischen Wasserspaltung, photokatalytischem Abbau organischer Verunreinigungen, Photodesinfektion, photokatalytischen und/oder katalytischen organisch-chemischen Reaktionen,
